# EUROPEAN PATENT SPECIFICATION

(11) **EP 1 704 122 B1**
(45) Date of publication and mention of the grant of the patent: **07.08.2013**
(21) Application number: 04801171.2
(22) Date of filing: 07.12.2004
(51) Int. Cl.: C02F 3/12

(54) **A BIOLOGICAL MINI SEWAGE TREATMENT PLANT AND USE OF THIS PLANT**
BIOLOGISCHE MINIABWASSERBEHANDLUNGSANLAGE UND VERWENDUNG DIESER ANLAGE
PETITE INSTALLATION BIOLOGIQUE DE TRAITEMENT DES EAUX USEES ET PROCÉDÉ EMPLOYANT LA MÊME

(30) Priority: 09.12.2003 DK 200301822
(43) Date of publication of application: 27.09.2006
(73) Proprietor: Feldthaus, Ole, 2800 Lyngby (DK)
(72) Inventor: Feldthaus, Ole, 2800 Lyngby (DK)
(74) Representative: Holme Patent A/S
(86) International application number: PCT/DK2004/000847
(87) International publication number: WO 2005/056484

(56) References cited:
- WO-A1-00/54869
- WO-A1-02/100783
- DE-A1- 19 939 679
- JP-A- 57 150 487
- JP-A- 60 147 292
- US-A- 3 366 242
- US-A- 3 834 536
- US-A- 4 224 155
- US-B1- 6 303 026

## Description

The invention relates to a biological mini sewage treatment plant for activated sludge treatment of wastewater and of the kind that comprises a reaction chamber immersed in a wastewater receptacle having an inlet for untreated wastewater and an outlet for treated wastewater, wherein the reaction chamber is in form of a reservoir with an outer wall and an at least partly open upper end and an at least partly open bottom, an aerator located at the bottom of the reaction chamber, and at least one partition for dividing the reaction chamber into a number of compartments, where the bottom of the reaction chamber is made with a damper for adjusting the size of the free opening of the bottom, and the reaction chamber is divided into a first compartment and a second compartment having a common wall in form of a partition.

The invention also relates to a method for treating wastewater.

The first stage in the waster water treatment process is normally a mechanical cleaning to remove the settleable solids and supernatant matter, such as e.g. grease and oil, for example by retention and collection. The mechanical cleaning can for example take place by means of screens, sieves, sand and grease trap and/or sedimentation tanks.

The purpose of this initial cleaning stage is partly to reduce the extent of the subsequent cleaning process by simply reducing the content of organic and inorganic matter that subsequently have to be removed, degraded or cleaned, and partly to ensure that possible subsequent treatment plants are not blocked up.

However, the initially removed organic and/or inorganic matter can be both voluminous and malodorous. Storage requires, among other things, prior stabilization, availability of storage sites, and that these sites are located in an area where the obnoxious smells are noticed the least possible. The dumped matter can also be incinerated to partly reduce the volume of waste and partly to prevent odour nuisances but this is a both costly and resource-consuming affair.

An activated sludge plant is a biological treatment plant, in which the inherent biological activity of the sludge is exploited to remove organic matter. Today, a large number of activated sludge plants of different configurations are known but they all have that in common that they all presuppose a preliminary settling, for example by means of sedimentation.

The conventional activated sludge plant is composed of an aeration tank and a sedimentation tank, which possibly can be integrated as one tank. In the sedimentation tank, the wastewater is treated so that the sludge is separated by gravitation into a sludge phase and a sludge liquor phase. In the aeration tank, the cleaned wastewater from the sludge liquor phase is mixed with a culture of microorganism under heavy aeration. The microorganisms utilize the organic matter content of the sludge liquor phase as carbon nutrient source and convert it into carbon dioxide and sludge. The sludge is separated into sludge and water in either a subsequent sedimentation tank or in the integrated sedimentation tank. A part of the settled sludge is led back to the aeration tank, possibly as return sludge, and is mixed with the fresh flow of wastewater. The excess sludge, which is the non-recirculated part of the sludge, is led to secondary treatment, for example dewatering, stabilization, dehydration and final disposal. The treated wastewater can be discharged to various recipients, such as directly to streams or percolation.

An efficient activated sludge plant requires that there is enough turbulence for keeping the sludge suspended and for continuously keeping the sludge in contact with supplied untreated wastewater. Turbulence can for example occur completely or partly due to the aeration which is necessary to ensure that the oxygen concentration is sufficiently high to allow bioconversion of the biomass.

Wastewater can have varying nitrogen contents, and nitrogen is normally removed in an alternate two-stage process, in which the wastewater is first nitrified, i.e. ammonium is converted into nitrate in the presence of oxygen. Then nitrate is denitrified under oxygen-poor but carbonaceous conditions to free nitrogen which is discharged to the atmosphere. The carbon source can either be the organic matter in the untreated sewage water or an extern carbon source in form of e.g. molasses or acetic acid.

A wastewater treatment plant is disclosed in Japanese patent publication nos. 60147292 and 57150487 and also in US patent no. 3,834,536.

From the Danish Utility Model Application No. DK 1999 0121 is known a mini treatment plant which is to be built into an existing septic tank. This known treatment plant comprises a vessel having a triangular horizontal section. The vessel is divided by dividing plates into three compartments, two smaller corner chambers and a larger central chamber, respectively, that are provided with a lamellar separator. The vessel has a sludge outlet at the bottom. The aerator is located in a pipe which is used to pump wastewater up from the septic tank to the vessel. This shot-gun aeration does not ensure optimum oxygen distribution in the wastewater, and a substantial amount of sludge will therefore be created. The inclined sludge separation plates serve for leading these substantial amounts of sludge towards the bottom of the chamber and the septic tank where the sludge subsequently has to be pumped to a separate sludge collection tank in order not to block the mini treatment plant.

The triangular horizontal section of the chamber means that the chamber has a relatively small volume that does not allow for larger loads. Therefore, the application of this known biological mini treatment plant presupposes that as much sludge as possible is removed in the preliminary settling process.

Sludge settled by sedimentation of the wastewater in a preliminary sedimentation tank will in the following be referred to as primary sludge. Biological sludge that has passed through an activated sludge plant is often termed secondary sludge. These terms are well-known to a person skilled in the art.

A first aspect of the present invention is to provide a biological mini treatment plant, by means of which it is possible to treat untreated wastewater without a preliminary sedimentation process.

A second aspect of the present invention is to provide a method for treating wastewater, by means of which it is possible to reduce the amount of sludge that subsequently has to be disposed of to a minimum.

A third aspect of the present invention is to provide a biological mini treatment plant that can be installed in an existing septic tank.

A fourth aspect of the present invention is to provide a biological mini treatment plant that is less vulnerable to the untreated wastewater contents of chemicals and cleaning agents than hitherto known.

A fifth aspect of the present invention is to provide a biological mini treatment plant, from which larger items and particulate matter which is not dissolved or degraded in the water phase can be removed in a cleaned state.

A sixth aspect of the present invention is to provide a mini treatment plant and a method for applying this plant, in which excess sludge is stable sludge.

The novel and unique feature according to the invention, whereby this is achieved, is the fact that the first compartment is in fluid communication with the wastewater receptacle via at least one pipe extending through the second compartment between the wall of the reaction chamber and the partition.

If the bottom opening of the reaction chamber can be resized, the dwell time in the reaction chamber can be adapted to the treatment demands of the individual households. The flow of water from the untreated wastewater receptacle and of air from the aerator through the reaction chamber can be controlled and managed and adapted to the individual composition and amount of the untreated wastewater of the individual household by making the bottom opening larger or smaller. Hereby, an optimum bioconversion and a smaller excess sludge production are obtained than hitherto known.

If the damper is a flap pivotally connected to the bottom of the reaction chamber, the angle of the flap in relation to the wall of the reaction chamber can be changed easily and thereby the size of the bottom opening. In case of e.g. significant changes in the composition of the household wastewater, the inventor's experiments have shown that a modification of this angle can promote the bioconversion.

The angular modification can be done in an especially easy manner if the flap is connected to a rod attached at one end to the flap and extending from this end to a free end that can be manipulated from the upper open end of the reaction chamber. Adjustment of the angularity of the flap can thus be done in a simple manner without having to take the reaction chamber out of the receptacle and thereby without having to lay up the treatment plant.

In accordance with the invention, the reaction chamber is divided into a first compartment and a second compartment. The two compartments have a common wall in form of a partition suspended in the reaction chamber. To forcedly guide and maintain water circulation and water exchange between the reaction chamber and the wastewater receptacle, the first compartment is placed in fluid communication with the wastewater receptacle by means of at least one pipe extending through the second compartment between the outer wall of the reaction chamber and the partition.

A part of the wastewater in the wastewater receptacle will be forced upward in the wastewater receptacle by the aerator, and a part of the wastewater with its content of biodegradable matter will be diverted through the at least one pipe. The dwell time of this recirculated wastewater in the mini treatment plant is thereby prolonged and permits increased bioconversion time.

In a preferred embodiment of the present invention, the cross section of at least the upper end of the reaction chamber is in form of a polygon with at least three edges. The inside face of the reaction chamber can function as guide surface or chute to particulate matter that is to be recirculated for renewed conversion, and the outer surface of the reaction chamber can function as guide surface to the wastewater that is forced into circulation by the aerator. The higher the density of the wastewater, the shorter the distance by which the wastewater can be forced upwards by an aerator supplying air at a constant rate. The water in the reaction chamber and the wastewater receptacle thus has different densities at different fluid levels. As the wastewater content of foreign matter is reduced the density of the wastewater is also reduced. When the density approaches that of clean water, this treated water will naturally be localized at the top of the mini treatment plant and will flow by itself to the outlet of the mini treatment plant.

Preferably, the area of the cross section of the reaction chamber is reduced towards the bottom of the reaction chamber to promote the function of the inside face of the reaction chamber as control surface.

An expedient polygon is a pentagon with two opposite, mainly parallel sides. The pentagon will generally consist of two symmetrical, mainly geometrically identical halves as such a reaction chamber offers a high degree of freedom for installation in different wastewater receptacles.

The suspended partition can advantageously divide the reaction chamber into a first compartment having a mainly triangular cross section. This first compartment comprises the partition and the two interconnected, nonparallel pentagon sides. The remaining part of the reaction chamber will form the second compartment. The shape of the cross section of the second compartment depends on the location of the partition in the reaction chamber but will generally have a mainly quadrangular or hexagonal shape. Advantageously, the first compartment will form an independent aeration zone, in which a high aerobic bioconversion of circulating wastewater can take place. The second compartment serves as secondary sedimentation zone, and a significant part of the water leaves the second compartment via the outlet as treated water. A small amount of sediment is led towards the bottom of the reaction chamber and is put in circulation again by the aerator.

The wastewater discharged directly from a household often has a content of grease and larger objects such as toilet paper, sanitary towels, tampons etc., which also will stay in the mini treatment plant according to the present invention. Grease will only be converted biologically to a very limited extent. Grease will encapsulate sludge particles and/or sludge flocks which thereby flow to the surface as floating sludge as water and grease phase are difficult to mix. Toilet paper etc. will be covered by biodegradable matter, sludge, which must be removed by the biodegradation phase in the reaction chamber. Such objects can be deposited at the water surface and be separated in a separator arranged at the upper end of the reaction chamber.

The separator is e.g. a catching sieve and/or a grease trap. Treated wastewater from the water surface is pumped via a decantation pipe to the catching sieve to continuously irrigate the content of the sieve so that adherent organic matter from the particulate matter is washed off and any risk of biological growth and odour is eliminated. The catching sieve only has to be emptied when necessary, and the content in the catching sieve that has been cleaned with treated water can be put directly into the municipal refuse bag. Possible floating sludge only exists momentarily in the plant but will be broken up in the decantation pipe and recirculated to the mini treatment plant.

The aim is to make the reaction chamber and the receptacle as aerobic as possible, and for this purpose the reaction chamber furthermore comprises an oxygen sensor. The oxygen concentration in the wastewater can be controlled continuously by means of an oxygen sensor. The plant is thus controlled by the load of wastewater supply. When a selected minimum concentration is reached, the aerator is activated to control the size of oxygen-poor cavities in the wastewater.

The method by means of which it is possible to treat untreated wastewater without a preliminary sedimentation phase by using the above mini treatment plant will be evident from the following detailed description of the plant with reference to the drawing, in which:
Fig. 1 is a perspective view of a mini treatment plant according to the present invention with the untreated wastewater receptacle partly removed for clarity,
Fig. 2 is a perspective view of the reaction chamber in fig. 1 with a separator for separating larger floating particles,
Fig. 3 is a plan view of the mini treatment plant of fig. 1,
Fig. 4 is a simplified sketch of the course of the water flow through the mini treatment plant of fig. 1.

In the following it is assumed that the untreated wastewater receptacle is an existing septic tank. It is furthermore assumed that the mini treatment plant according to the present invention meets the requirements of national and regional authorities to a biological activated sludge plant and that the wastewater is wastewater discharged directly from a household via e.g. kitchen drain or toilet drain.

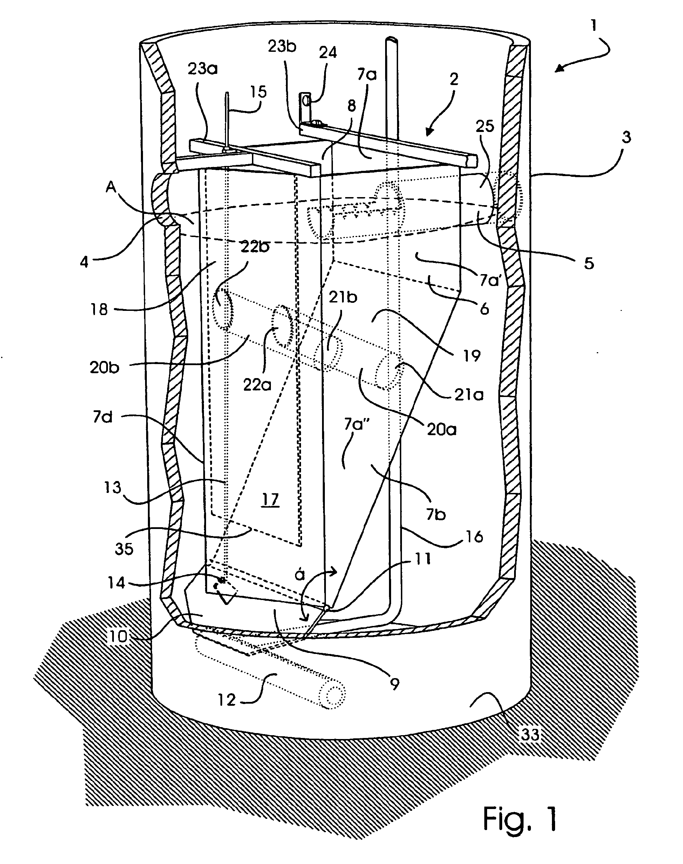

As seen in fig. 1, the mini treatment plant 1 is composed of two main components, namely a reaction chamber 2 freely suspended in an untreated wastewater receptacle 3 in form of an existing septic tank 3 at a distance from the interior wall and bottom of this tank. The septic tank 3 has an inlet 4, through which untreated wastewater from the household is received for accumulation and treatment in the septic tank 3 and the reaction chamber 2, respectively. The septic tank 3 also has an outlet 5, through which treated wastewater is removed after a certain holding time and treatment in the mini treatment plant 1. The water level A is shown in dashed line.

The pentagonal reaction chamber 2 has a circumferential wall 6 with a total of five sides 7a,7b,7c,7d,7e. The reaction chamber 2 has an open upper end 8 and tapers from this end 8 towards an open bottom 9. A damper 10 in form of a flap 10 is pivotally connected to the lower edge of the side 7a by means of a hinge 11. The side 7a, which is bent at an angle of about 160° in the preferred embodiment shown, is divided into a top side 7a' and a bottom side 7a". The cross section of the reaction chamber 2 is here, only as an example, shown to be a symmetrical pentagon with two parallel sides 7b,7e, however modifications to the pentagonal cross sections of the reaction chamber 2 is possible within the scope of the invention as defined in the claims. For example the sides 7c and 7d connected at a mutual angle of about 120° can instead have a continuous arch shape, and the right angles between the sides 7a' and 7b, 7e and 7a' respectively can be more or less obtuse.

An aerator 12 in form of an air diffuser 12 is located beneath the bottom 9 of the reaction chamber 2. The air diffuser 12 supplies oxygenous air and maintains circulation and turbulence in the mini treatment plant 1. The diffuser 12 is here shown as a cylindrical, perforated pipe but can instead be for example a disc diffuser or another type of diffuser known to a person skilled in the art. The oxygen demand is optionally measured by means of one or more oxygen sensors (not shown), and the air supply is controlled by a PLC controller (not shown) in accordance with the measuring results to ensure very oxygen-enriched conditions everywhere in the plant 1.

Alternatively constant aeration can be maintained by choice. However, this is very energy consuming and therefore costly. In a simple embodiment aeration at fixed time intervals is chosen, which experience shows, can cover the aeration need. Also in this case, the aeration is controlled by a PLC controller or a timer.

The flap 10 is connected to a rod 13 attached to the flap 10 with one end 14 and having a free end 15 which can be controlled from the upper end 8 of the reaction chamber without removing the reaction chamber 2 from the septic tank 3. The size of the opening of the bottom 9 is regulated by pulling at the free end 15 of the rod 13 to change the angle α between the side 7a" and the flap 10. The angle α is determined iteratively *in situ* or on basis of experience material from similar loads. Such experience material is recorded in tabular form for use in similar installations. Exact adjustment or subsequent adjustment of the angle α can subsequently easily be done in so far as it is necessary.

Regulation is done the easiest manually. In an alternative embodiment, the rod can be replaced by a remote-controlled servomotor connected to the flap 10. This embodiment is more expensive and will constitute a risk of technical failure and drop-out.

The diffuser 12 is connected to a pump, not shown, which pumps surface air via a pipe 16 out through the diffuser 12.

A partition 17 divides the reaction chamber 2 into a first compartment 18 of a triangular cross section and a second compartment 19 of a hexagonal cross section. The cross section of the second compartment appears mainly quadrangular, as the length of the two opposite sides of the hexagon adjoining the partition 17 is neglectable.

The septic tank 3 is in fluid communication with the first compartment 18 via two pipes 20a,20b. The pipes 20a,20b extend perpendicular from the side 7a" in the case shown, the pipes 20a,20b ending in the openings 21a,21b in this side 7a". The pipes 20a,20b extend from the side 7a" towards the partition 17, in which wall 17 the pipes 20a,20b end in the openings 22a,22b which are located higher up than the openings 21a,21b.

The reaction chamber 2 is suspended on the inside of the septic tank 3 by means of side members 23a,23b and mountings 24a,24b,24c so that enough room is left beneath the bottom 9 of the reaction chamber 2 to allow regulation of the angle α of the flap 10 without damaging the diffuser and for free water circulation taking place along the bottom and interior wall of the septic tank.

A secondary settlement channel 25 is part of the outlet 5 and water is led through this channel further on to the recipient.

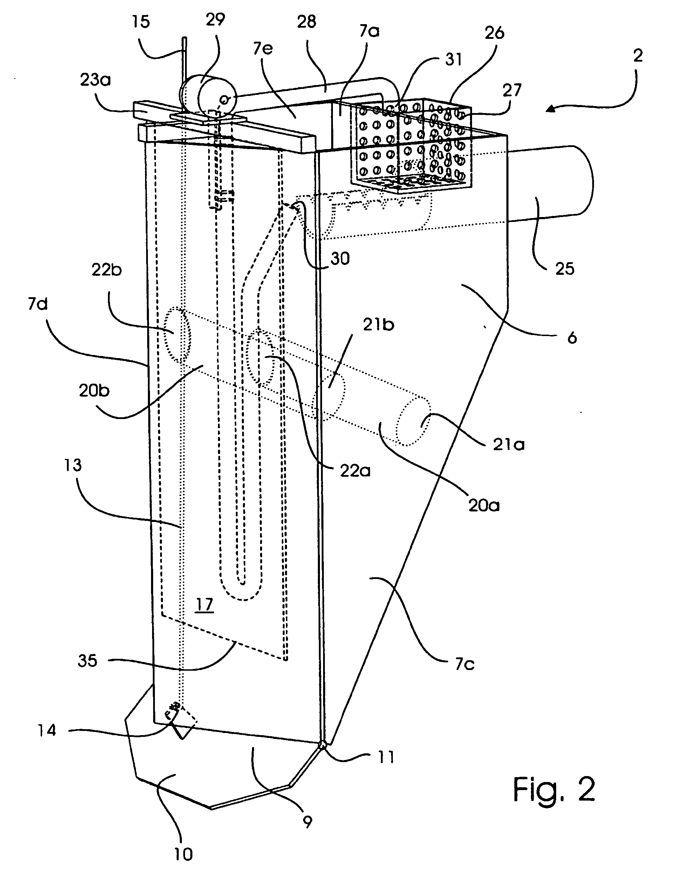

As seen best in fig. 2, the reaction chamber 1 can furthermore be provided with a separator 26 consisting of a sieve 27 and a decantation pipe 28. Through the decantation pipe the pump 29 can pump floating sludge and other floating, particulate matter onto the sieve 27 as required. Treated surface water from the mini treatment plant is continuously pumped from the first end 30 of the decantation pipe out through the second end of the decantation pipe 31, said end is located above the sieve 27 so that the sieve content continuously is irrigated and washed of organic matter. When the sieve 27 is full, it is emptied manually. Due to the final washing with treated clean wastewater, the sieve content can now simply be discarded with the domestic waste. Contrary to the sedimentation waste from a known preliminary sedimentation tank the content is completely clean and does not smell. Due to the very high conversion degree in the mini treatment plant, emptying of the sieve 27 is only rarely necessary, and pilot installations indicate an expected average number of emptying per year of between 2 and 3.

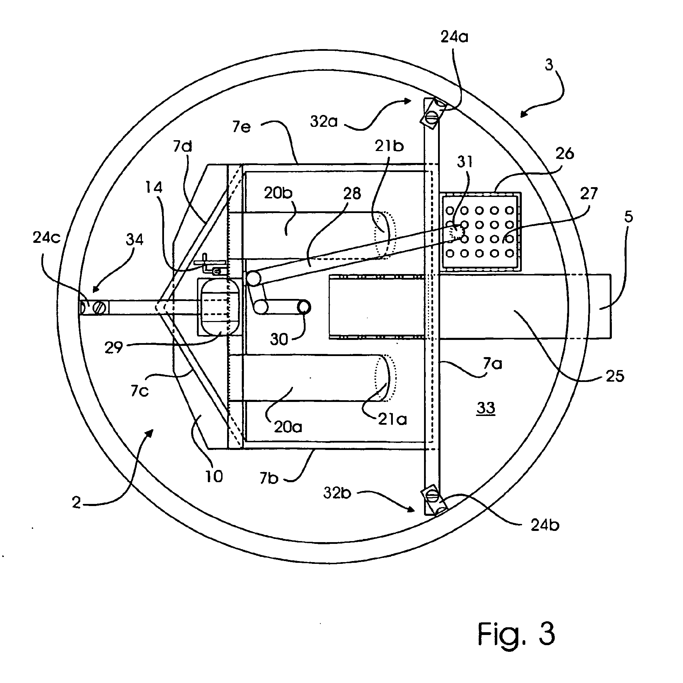

The suspension of the reaction chamber 2 in the septic tank 3 is seen best in fig. 3, showing the mini treatment plant of fig. 1 from above. The reaction chamber is here shown suspended with side members 23a,23b in three suspension points 32a,32b,34 by means of the mountings 24a,24b,24c, respectively. Other types of suspension mountings and means are possible within the scope of the invention as defined in the claims, just as the reaction chamber alternatively can be made with support legs so that it stands on the bottom of the septic tank instead of being suspended along the wall of the tank.

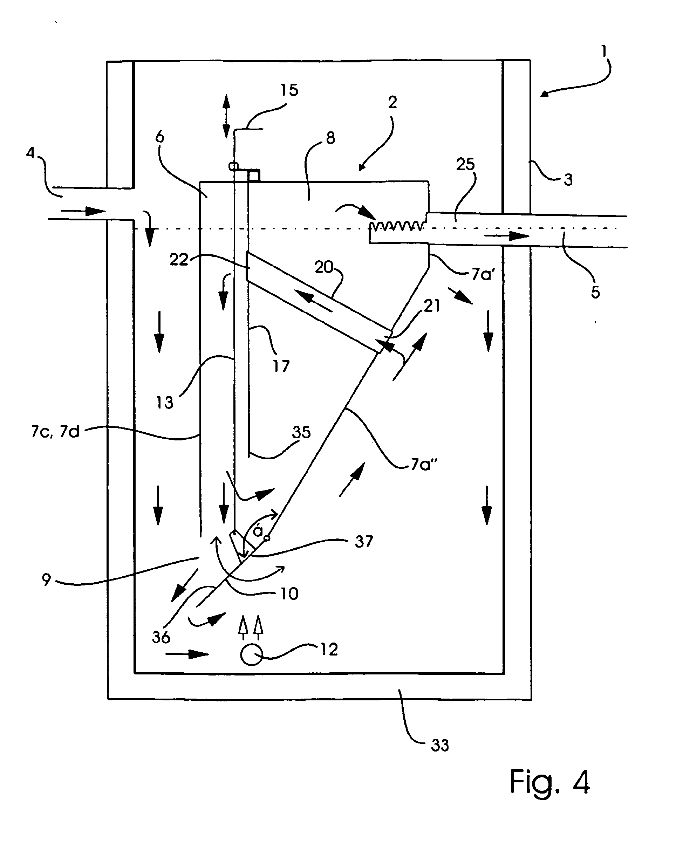

The water circulation and water flow will be described in more detail in the following with reference to fig. 4.

Untreated wastewater is supplied through the inlet 4 and flows, due to gravitation, down along the sides 7c and 7d of the reaction chamber 2 towards the bottom 9 of the reaction chamber 2 and the bottom 33 of the septic tank 3 as shown in fig. 4 by means of the arrows. Air from the diffuser 12 forces the water up in the septic tank 3 as shown by means of open arrows in fig. 4. The lower face 37 of the flap 10 serves as guide face to the upwardly forced water which is led further along the side 7a" and up into the space between the inside face of the septic tank 3 and the side 7a". As the area available between the inside face of the septic tank 3 and the sides 7a', 7a" of the reactions chamber is reduced towards the upper end 8 of the reaction chamber 2', a first aerated partial volume of upwardly forced water of high density will only be able to rise to the area near the openings 21a,21b of the pipes 20a,20b in the side 7a". This first partial volume is recirculated through the pipes 20a,20b into the first compartment 18 and flows towards the bottom 9 due to gravitation, the bioconversion taking place continuously and reducing the density of the water in the first compartment 18. The water leaving the first compartment 18 at the bottom 9 is in principle divided into a mainly particulate fraction and a water fraction. The water fraction leaving the first compartment 18 at the bottom has such a low density that this water fraction passes under the lower edge 35 of the partition and rises in the second compartment 19 and is then discharged via the secondary settlement channel 25 and the outlet 5. The particulate fraction settles towards the top face 36 of the flap 10 for renewed circulation and upward forcing by means of air from the diffuser. The second partial volume which does not pass through the pipes 20a,20b continues upward in the space between the inside face of the septic tank and the sides 7a",7a' to a maximum height depending on the energy supplied by the diffuser, after which the water flow turns as shown by the arrows and returns towards the bottom 33 of the septic tank 3 for renewed treatment and mixing with fresh untreated wastewater and the particulate fraction.

The standing period of the water in the two compartments is controlled by the aerator, as there is no or only very small circulation when the aerator is inoperative. The treatment process partly takes place during a water exchange period and partly during a standing period with both periods predominantly rich in oxygen.

The untreated wastewater receptacle can instead be a receptacle newly-installed especially for this purpose, such as e.g. a concrete pipe having a larger inside diameter than the reaction chamber. Installation of such a concrete pipe will be required in cases where the dimensions of the septic tank are not compatible with that of the reaction chamber and where the mini treatment plant therefore does not meet existing standards and requirements.

The exemplary angles between the sides of the reaction chamber are intended as a guide, and modifications of these angles are comprised within the scope of the invention.

The mini treatment plant according to the present invention is supplied with wastewater, as mentioned, at a wastewater load of between 3 - 30 PE (person equivalent, 0.2 m³/day, 60 g BOD/d).

The plant according to the present invention can be granted type approval pursuant to Danish consolidated Act No. 500 of June 21, 1999, and meets the discharge requirements of the treatment classes below:

| **Treatment class** | **BI₅ (mod.) (mg/l)** | **NH₃ + NH₄-N (mg/l)** | **Total P (mg/l)** |
|---|---|---|---|
| SOP | 10 | 5 | 1.5 |
| SO | 10 | 5 | - |
| OP | 30 | - | 1.5 |
| O | 30 | - | - |

| | | | |
|---|---|---|---|
| O: Reduction of organic matter SO: Tightened requirement to reduction of organic matter and nitrification P: Reduction of phosphorus BI₅ (mod.): Modified analysis of BI₅ when nitrification is prevented | | | |

Contrary to the known technique, the supplied wastewater has not been subjected to a preliminary sedimentation process but maintains a very high treatment capacity which appears from analyses of samples of treated wastewater from a pilot plant according to the present invention. The analyses are done by recognized analysis laboratories or at an analysis laboratory controlled by a recognized analysis laboratory.

The samples are taken partly as 24h samples and partly as random samples. The samples cover a period of time from 1999 to 2003.

The samples are analysed for:
COD: chemical oxygen demand
BOD: 5 day biochemical oxygen demand at 20°C
Ammonium: ammonium + ammonia nitrogen

The results are given in the table below.

| **Analysis date** | **COD in mg (O₂/L)³⁾** | **BOD (BI₅) in mg (O₂/L)⁴⁾** | **Ammonium (mg N/L)⁵⁾** | **Suspended matter (mg/L)/ settleable matter (mg/L⁹)** |
|---|---|---|---|---|
| 25.11.1999^{1,7)} | 46 | 5.1 | 0.11 | <5.0/- |
| 14.09.2000^{2,6)} | - | 3.8 | 0.48 | -/0.9 |
| 17.10.2000^{2,6)} | - | 2.3 | 0.11 | 6.4/0.1 |
| 27.08.2002^{2,6)} | 34 | 2.8 | 0.18 | 6.8 |
| 26.10.2003^{8,7)} | 50.2 | - | 0.32 | 24.5 |
| 19.11.2003^{8,7)} | 30.9 | 2.2 | 0.09 | 6.5 |
| 03.12.2003^{8,7)} | 31.1 | 2.3 | 0.08 | 2.6 |

| | | | | |
|---|---|---|---|---|
| 1) done by Miljø-Levnedsmiddelcenter Øst, Tigervej 30, 4600 Køge, Denmark (recognized). 2) done by Rovesta Miljø I/S, Ved Asen 1, 4700 Næstved, Denmark (recognized). 3) done pursuant to Danish Standard DS 217 4) done pursuant to Danish Standard DS/R254 5) done pursuant to Danish Standard DS 224 6) 24 h sample 7) Random sample from daylight hours 8) done by Køge Kommunes laboratory, Køge sewage treatment plant, 4600 Køge, Denmark (not recognized but controlled by Rovesta Miljø I/S). 9) done pursuant to Danish Standard DS 2007 | | | | |

## Claims

1. A biological mini sewage treatment plant (1) for activated sludge treatment of wastewater and of the kind comprising a reaction chamber (2) immersed in a wastewater receptacle (3) having an inlet (4) for untreated waste water and an outlet (5) for treated wastewater,
- wherein the reaction chamber (2) is in form of a reservoir with a wall (6) and an at least partly open upper end (8) and an at least partly open bottom (9),
- an aerator (12) located beneath the bottom (9) of the reaction chamber (2),
- the bottom (9) of the reaction chamber (2) is made with a damper (10) for adjusting the size of the free opening of the bottom (9), and
- the reaction chamber (2) is divided into a first compartment (18) and a second compartment (19) having a common wall (17) in form of a partition (17) suspended in the reaction chamber (2),
**characterized in**
- **that** the first compartment (18) is in fluid communication with the wastewater receptacle (3) via at least one pipe (20a,20b) extending through the second compartment (19) between the wall (6) of the reaction chamber (2) and the partition (17).

2. A biological mini sewage treatment plant (1) according to claim 1, **characterized in that** the damper (10) is a flap (10) pivotally connected to the bottom (9) of the reaction chamber (2).

3. A biological mini sewage treatment plant (1) according to claim 1 or 2, **characterized in that** the damper (10) is connected to a rod (13) extending between the flap (10) and the upper end (8) of the reaction chamber (2) and is arranged to adjust an angle α between the damper (10) and the wall (6) of the reaction chamber (2).

4. A biological mini sewage treatment plant (1) according to claim 1, 2, or 3, **characterized in that** at least the upper end (8) of the reaction chamber (2) has a cross section in form of a polygon with at least three edges and that the area of this cross section is reduced towards the bottom (9) of the reaction chamber (2).

5. A biological mini sewage treatment plant (1) according to claim 4, **characterized in that** the polygon is a pentagon with two opposite, mainly parallel sides.

6. A biological mini sewage treatment plant (1) according to any of the claims 1 - 5, **characterized in that** the reaction chamber (2) furthermore comprises a separator (26) arranged at the upper end (8) for separating larger particles and objects.

7. A biological mini sewage treatment plant (1) according to any of the claims 1 - 6, **characterized in that** the reaction chamber (2) furthermore comprises an oxygen sensor.

8. A method for treating untreated wastewater, wherein the method comprises
- installing a biological mini sewage treatment plant (1) according to any of the claims 1 - 7,
- continuously leading untreated wastewater directly to the untreated wastewater receptacle of the biological mini sewage treatment plant (1) without a preliminary sedimentation phase,
- aerating the wastewater,
- circulating the wastewater from the wastewater receptacle (3) through the reaction chambers (18,19) of the mini sewage treatment plant (1),
- discharging treated wastewater from the receptacle (3).

9. A method according to claim 8, **characterized in that** the method furthermore comprises a final phase in which treated wastewater is subjected to secondary sedimentation and larger particles are separated.

## Patentansprüche

1. Eine biologische Abwasserbehandlungskleinanlage (1) zur Behandlung von aktiviertem Abwasserschlamm von der Art mit einer Reaktionskammer (2), die in eine Abwasseraufnahme (3) mit einem Einlass (4) für das unbehandelte Abwasser und einem Auslass (5) für das behandelte Abwasser eingetaucht ist,
- wobei die Reaktionskammer (2) in Form eines Reservoirs mit einer Wandung (6) und einem wenigstens teilweise offenen oberen Ende (8) und einem wenigstens teilweise offenen Boden (9),
- einem Belüfter (12), der unter dem Boden (9) der Reaktionskammer (2) angeordnet ist,
- wobei der Boden (9) der Reaktionskammer (2) mit einem Dämpfer zum Justieren der Größe der freien Öffnung des Bodens (9) versehen ist, und
- wobei die Reaktionskammer (2) in eine erste Kammer (18) und eine zweite Kammer (19) mit einer gemeinsamen Wand (17) in Form einer Trennwand (17), die in die Reaktionskammer (2) abgehängt ist, geteilt ist,
**dadurch gekennzeichnet,**
- **dass** die erste Kammer (18) über wenigstens ein Rohr (20a, 20b), das sich durch die zweite Kammer (19) zwischen der Wand (6) der Reaktionskammer (2) und der Trennwand (17) erstreckt, in fluidischer Kommunikation mit der Abwasseraufnahme (3) ist.

2. Eine Kleinanlage (1) zur biologischen Behandlung eines Abwassers nach Anspruch 1, **dadurch gekennzeichnet, dass** der Dämpfer (10) eine Klappe (10) ist, die verschwenkbar mit dem Boden (9) der Reaktionskammer (2) verbunden ist.

3. Eine Kleinanlage (1) zur biologische Abwasserbehandlung nach Anspruch 1 oder 2, **dadurch gekennzeichnet, dass** der Dämpfer (10) mit einer Stange (13) verbunden ist, die sich zwischen der Klappe (10) und dem oberen Ende der Reaktionskammer (12) erstreckt und zum Justieren eines Winkels α zwischen dem Dämpfer (10) und der Wand (6) der Reaktionskammer (2) eingerichtet ist.

4. Eine Kleinanlage (1) zur biologischen Abwasserbehandlung nach Anspruch 1, 2 oder 3, **dadurch gekennzeichnet, dass** wenigstens das obere Ende der Reaktionskammer (2) einen Querschnitt in Form eines Polygons mit wenigstens drei Ecken hat und dass der Bereich dieses Querschnitts in Richtung auf den Boden (9) der Reaktionskammer (2) reduziert ist.

5. Eine Kleinanlage (1) zur biologischen Abwasserbehandlung nach Anspruch 4, **dadurch gekennzeichnet, dass** das Polygon ein Fünfeck mit zwei gegenüberliegenden, im Wesentlichen parallelen Seiten ist.

6. Eine Kleinanlage (1) zur biologischen Abwasserbehandlung nach einem der Ansprüche 1 - 5, **dadurch gekennzeichnet, dass** die Reaktionskammer (2) weiter einen an dem oberen Ende (8) angeordneten Separator (26) zum Abtrennen größerer Partikel und Objekte aufweist.

7. Eine Kleinanlage (1) zur biologischen Abwasserbehandlung nach einem der Ansprüche 1 - 6, **dadurch gekennzeichnet, dass** die Reaktionskammer (2) weiter einen Sauerstoffsensor aufweist.

8. Ein Verfahren zum Behandeln von nicht behandeltem Abwasser, wobei das Verfahren aufweist
- Installieren einer Kleinanlage (1) zur biologischen Abwasserbehandlung nach einem der Ansprüche 1 - 7,
- kontinuierliches Führen von nicht behandeltem Abwasser direkt zu der Aufnahme für unbehandeltes Abwasser der Kleinanlage (1) zur biologischen Abwasserbehandlung, ohne eine vorangehende Sedimentationsphase,
- Belüften des Abwassers,
- Zirkulieren des Abwassers aus der Abwasseraufnahme (3) durch die Reaktionskammern (18, 19) der Kleinanlage (1) zur Abwasserbehandlung,
- Abführen des behandelten Abwassers aus der Aufnahme (3).

9. Ein Verfahren nach Anspruch 8, **dadurch gekennzeichnet, dass** das Verfahren weiter eine Endphase aufweist, in der das behandelte Abwasser einer sekundären Sedimentation unterworfen wird, in der größere Partikel abgetrennt werden.

## Revendications

1. Petite installation biologique de traitement des eaux usées (1) destinée au traitement par boues activées des eaux usées et du type comprenant une chambre de réaction (2) immergée dans un réceptacle d'eau usée (3) ayant une entrée (4) pour l'eau usée non traitée et une sortie (5) pour l'eau usée traitée,
dans laquelle la chambre de réaction (2) se présente sous la forme d'un réservoir avec une paroi (6) et une extrémité supérieure au moins partiellement ouverte (8) et un fond au moins partiellement ouvert (9),
un aérateur (12) situé au-dessous du fond (9) de la chambre de réaction (2),
le fond (9) de la chambre de réaction (2) est réalisé avec un registre (10) pour ajuster la taille de l'ouverture libre du fond (9), et
la chambre de réaction (2) est divisée en un premier compartiment (18) et en un second compartiment (19) ayant une paroi commune (17) se présentant sous la forme d'une séparation (17) suspendue dans la chambre de réaction (2),
**caractérisée en ce que** :
le premier compartiment (18) est en communication de fluide avec le réceptacle d'eau usée (3) via au moins un tuyau (20a, 20b) s'étendant à travers le second compartiment (19) entre la paroi (6) de la chambre de réaction (2) et la séparation (17).

2. Petite installation biologique de traitement des eaux usées (1) selon la revendication 1, **caractérisée en ce que** le registre (10) est un volet (10) raccordé de manière pivotante au fond (9) de la chambre de réaction (2).

3. Petite installation biologique de traitement des eaux usées (1) selon la revendication 1 ou 2, **caractérisée en ce que** le registre (10) est raccordé à une tige (13) s'étendant entre le volet (10) et l'extrémité supérieure (8) de la chambre de réaction (2) et est agencé pour ajuster un angle α entre le registre (10) et la paroi (6) de la chambre de réaction (2).

4. Petite installation biologique de traitement des eaux usées (1) selon la revendication 1, 2 ou 3, **caractérisée en ce qu'**au moins l'extrémité supérieure (8) de la chambre de réaction (2) a une section transversale se présentant sous la forme d'un polygone avec au moins trois bords, et **en ce que** la surface de cette section transversale est réduite vers le fond (9) de la chambre de réaction (2).

5. Petite installation biologique de traitement des eaux usées (1) selon la revendication 4, **caractérisée en ce que** le polygone est un pentagone avec deux côtés principalement parallèles opposés.

6. Petite installation biologique de traitement des eaux usées (1) selon l'une quelconque des revendications 1 à 5, **caractérisée en ce que** la chambre de réaction (2) comprend en outre un séparateur (26) agencé au niveau de l'extrémité supérieure (8) pour séparer les plus grosses particules et les objets.

7. Petite installation biologique de traitement des eaux usées (1) selon l'une quelconque des revendications 1 à 6, **caractérisée en ce que** la chambre de réaction (2) comprend en outre un capteur d'oxygène.

8. Procédé de traitement des eaux usées non traitées, lequel procédé comprend :
l'aménagement d'une petite installation biologique de traitement des eaux usées (1) selon l'une quelconque des revendications 1 à 7,
l'acheminement en continu de l'eau usée non traitée directement vers le réceptacle d'eau usée non traitée de la petite installation biologique de traitement des eaux usées (1) sans phase de sédimentation préliminaire,
l'aération de l'eau usée,
la circulation de l'eau usée du réceptacle d'eau usée (3) en passant par les chambres de réaction (18, 19) de la petite installation de traitement des eaux usées (1),
le déchargement de l'eau usée traitée du réceptacle (3).

9. Procédé selon la revendication 8, **caractérisé en ce que** le procédé comprend en outre une phase finale dans laquelle l'eau usée traitée est soumise à une sédimentation secondaire et les plus grosses particules sont séparées.
